# EUROPÄISCHE PATENTSCHRIFT

(11) **EP 2 033 554 B1**
(45) Veröffentlichungstag und Bekanntmachung des Hinweises auf die Patenterteilung: **11.08.2010**
(21) Anmeldenummer: 07017454.5
(22) Anmeldetag: 06.09.2007
(51) Int. Cl.: A47J 43/27, B65D 1/04, B65D 81/32

(54) **Mischbehälter**
Mixing vessel
Récipient de mélange

(43) Veröffentlichungstag der Anmeldung: 11.03.2009
(73) Patentinhaber: Giuralarocca, Daniele, 8964 Rudolfstetten (CH)
(72) Erfinder: Giuralarocca, Daniele, 8964 Rudolfstetten (CH)
(74) Vertreter: Fischer, Britta Ruth

(56) Entgegenhaltungen:
- WO-A-2006/048866
- US-A- 2 627 184

## Beschreibung

Die Erfindung betrifft einen Mischbehälter gemäss Oberbegriff des Anspruchs 1.

Üblicherweise werden alkoholische oder nichtalkoholische Getränke von einem Barkeeper nach Augenmass in einem so genannten Shaker hergestellt, wobei die Verschlusskappe des Shakers üblicherweise 2cl fasst (vgl. http://de.wikipedia.org/wiki/Shaker_%28Barzubeh%C3%B6r%29 ). Die Herstellung eines Getränks mittels eines solchen Shakers ist zeitaufwändig. Ferner hängt die Menge der zu vermischenden Bestandteile des Getränks vom Augenmass des Barkeepers ab, was eine geringe Genauigkeit und eine geringe Wiederholbarkeit bei der Herstellung des Getränks zur Folge haben kann. Eine für den Endverbraucher des Getränks optimale Mischung kann somit oftmals nicht garantiert werden.

Weiter sind beispielsweise zur Aufbewahrung von Yoghurt Behälter mit zwei Kammern bekannt, deren Öffnungen mit einer aufgeschweissten Aluminiumfolie verschlossen sind. Bei diesen Behältern sind die Mischkombinationen sehr eingeschränkt und das Entfernen der Aluminiumfolie zum Öffnen des Behälters bereitet dem Endverbraucher oftmals Schwierigkeiten. Der in einer Kammer befindliche Inhaltsstoff besteht häufig aus mehreren Bestandteilen, d.h. er ist bereits vorvermischt. Dies kann jedoch eine kürzere Haltbarkeit zur Folge haben.

Die internationale Patentanmeldung WO-A-2006048866 offenbart einen Mischbehälter mit einem Becher, der auf ein Trinkgefäss aufgesetzt werden kann, wobeider Becher mehrere Kammern zur Aufnahme von Komponenten aufweist, die durch Trennwände getrennt und von einer Folie verschlossen sind.

Aus der Patentschrift US-A-2 627 184 ist ein Mischbehälter bekannt, der einen Becher mit vier Kammern aufweist, die durch Trennwände voneinander getrennt sind. Es ist ein konisch geformtes Top mit einem als Auslass fungierenden Sieb vorgesehen, dem eine abnehmbare Abdeckung zugeordnet ist.

Es ist Aufgabe der vorliegenden Erfindung, einen Mischbehälter zu schaffen, mit dem die aus dem Stand der Technik bekannten Nachteile vermieden werden können.

Die Aufgabe wird durch einen Mischbehälter mit den Merkmalen des Anspruchs 1 gelöst.

Der erfindungsgemässe Mischbehälter umfasst einen Becher und einen Deckel und kennzeichnet sich dadurch aus, dass der Becher wenigstens drei Kammern aufweist, die durch Trennwände voneinander getrennt sind. Die Kammern weisen an einer offenen Seite des Bechers jeweils eine Öffnung auf. Der erfindungsgemässe Mischbehälter ist sowohl zum Aufbewahren und zur Vermischung von flüssigen Stoffen als auch von festen Stoffen wie beispielsweise Mehl oder Zucker geeignet, wobei auch feste Stoffe und Flüssigkeiten gleichzeitig in unterschiedlichen Kammern aufbewahrt und bei Gebrauch miteinander vermischt werden können.

Es können verschiedene Stoffe aufbewahrt werden, wobei jedem Stoff eine eigene Kammer zugeordnet ist, ohne dass sich die Stoffe vermischen. Da die einzelnen Stoffe direkt in die Kammern eingefüllt werden und dies automatisiert erfolgen kann, erübrigt sich ein Abfüllen der verschiedenen Stoffe nach Augenmass, so dass die einzelnen Stoffe genau dosiert werden können. Je mehr Kammern vorgesehen sind, desto mehr Variationsmöglichkeiten für das Endprodukt, was aus den in den Kammern befindlichen Stoffen durch Vermischung beim Gebrauch gebildet wird, sind möglich. Dass jeder Stoff in einer eigenen Kammer aufbewahrt wird, führt zur Erhöhung der Haltbarkeit.

Es ist eine Folie zum Verschliessen der Öffnungen der Kammern vorgesehen, die vor der ersten Benutzung aufgetrennt bzw. geöffnet werden muss. Vorzugsweise wird die Folie hierbei zerstört, sodass eine Erstöffnungsgarantie gegeben ist. Die Folie kann beispielsweise durch Schweissen an die öffnungsseitigen Ränder des Bechers und der Trennwände angebracht worden sein. Die Folie verhindert ein Vermischen der in den Kammern befindlichen Stoffe vor der ersten Benutzung bzw. dem ersten Gebrauch. Die Folie sorgt somit dafür, dass sich die in den Kammern befindlichen Stoffe erst beim Einnehmen bzw. Trinken und nicht schon beispielsweise beim Transport vermischen. Die Folie kann beispielsweise aus Aluminium bestehen bzw. Aluminium als Material umfassen.

Gemäss bevorzugter Ausgestaltung weist der Deckel einen Auslass auf, der bevorzugt gegenüber der becherseitigen Öffnung des Deckels vorgesehen ist. Ferner ist der Deckel insbesondere konische geformt, indem sich der Deckel zum Auslass hin verjüngt. Die konische Form des Deckels ermöglicht eine angenehme Einnahme der Inhaltsstoffe des Mischbehälter, insbesondere ein angenehmes Trinken, und eine gute bis optimale Vermischung der in den einzelnen Kammern des erfindungsgemässen Mischbehälters befindlichen Stoffe bzw. Komponenten bei geöffneter Folie. Es ist vorteilhafterweise keine Drehung des Mischbehälters um dessen eigene Achse für die Vermischung diese Inhaltsstoffe erforderlich. Eine Verwirbelung ergibt sich bereits durch die konische Form des Deckels, wobei auf der Deckelinnenseite zusätzliche Mittel zur Verwirbelung vorgesehen sein können, die beispielsweise als Rillen und/oder Kanten in bzw. an der Deckelinnenseite ausgeführt sein können. Ferner können auch die Trennwände spiralförmig verlaufen, was ebenfalls eine bessere Verwirbelung bzw. Vermischung der in den Kammern befindlichen Stoffe zur Folge hat. Der Deckel kann auch trichterförmig ausgebildet sein. Selbstverständlich kann der Deckel auch eine andere als eine konische Form aufweisen, zum Beispiel eine zylinderförmige, quader- oder würfelförmige Form, wobei wie bei einem Trichter ein dünner Teil als Verbindung zum Auslass vorgesehen sein kann.

Der Auslass des Deckels kann mit einem entfernbaren Schutzelement versehen sein, beispielsweise einer mit einer Lasche versehenen, abreissbaren Folie oder einer sonstigen entfernbaren Abdeckung bzw. einem sonstigen entfernbaren Verschluss. Das Schutzelement dient insbesondere als Staubschutz und als Schutz gegenüber Verschmutzungen.

Der Deckel weist Mittel zum Auftrennen der Folie auf, wobei die Mittel zum Auftrennen der Folie vorzugsweise Schneid- und/oder Spreizelemente aufweisen. Bei den Schneidelementen handelt es sich vorzugsweise um in den Innenraum des Deckels hineinragende Stege, die versetzt zu den Trennwänden und bevorzugt parallel zu diesen an der Deckelinnenseite angeordnet sind. Die Spreizelemente verlaufen vorzugsweise parallel zur Deckelinnenseite und sind an dieser angeordnet. Wird der Deckel auf die Folie gedrückt, beispielsweise mittels eines Schlages auf den Deckel bzw. dessen Auslass, so öffnen die Schneidund Spreizelemente die einzelnen Kammern des Mischbehälters, indem die Schneidelemente die Folie durchtrennen und die Spreizelemente die Folie nach unten klappen und auf diese Weise gegen die Becherinnenseite drücken. Ein unmittelbares Abnehmen der Folie durch den Endbenutzer ist somit nicht erforderlich, da die Folie mittels des Deckels bzw. dessen Schneid- und/oder Spreizelementen aufgetrennt werden kann. Die Folie kann auf diese Weise leicht geöffnet werden. Das Öffnen der Folie mittels des Deckels bzw. dessen Schneid- und/oder Spreizelementen bietet eine Erstöffnungsgarantie, da nach dem ersten Öffnen die Folie diese nicht wieder geschlossen werden kann.

Gemäss weiterer besonders bevorzugter Ausgestaltung der Erfindung sind Einrastmittel zum Positionieren des Deckels vorgesehen, die insbesondere eine Nut und eine Ausbuchtung umfassen, wobei unter einer Nut eine Einbuchtung jeglicher Form verstanden werden kann. Die Einrastmittel können derart ausgestaltet sein, dass der Deckel vor der Benutzung des Mischbehälters in einer ersten Position gehalten und für die Benutzung des Mischbehälters, beispielsweise beim Trinken, in einer zweiten Position eingerastet werden kann, wobei der Deckel vorzugsweise sowohl in der ersten Position als auch in der zweiten Position oberhalb des Bechers positioniert ist. Die zweite Position des Deckels ist vorzugsweise derart gewählt, dass die die Öffnungen der Kammern verschliessende Folie in dieser zweiten Position mittels den an dem Deckel angebrachten Mitteln zum Auftrennen der Folie aufgetrennt werden kann. Die Einrastmittel umfassen für jede Position des Deckels bevorzugt jeweils eine Nut und eine Ausbuchtung, wobei entweder die Nut an einer Deckelinnenseite und die Ausbuchtung an einer Becheraussenseite oder die Nut an der Becheraussenseite und die Ausbuchtung an der Deckelinnenseite angeordnet sind. Das Einrasten des Deckels in der zweiten Position kann ebenfalls eine Erstöffnungsgarantie darstellen, falls die Einrastmittel derart ausgestaltet sind, dass der Deckel aus der zweiten Position nicht mehr gelöst werden kann.

Gemäss einer weiteren bevorzugten Ausgestaltung der Erfindung ist an dem öffnungsseitigen Becherrand bzw. Becherrandbereich ein Ring angeordnet, an dem der Deckel über Verbindungsmittel, beispielsweise über einen oder mehrere Stege befestigt ist. Es ist vorzugsweise ein abnehmbarer Verschluss vorgesehen, der den Ring bzw. die offene Seite des Bechers verschliesst. Für den Gebrauch wird der abnehmbare Verschluss vom Benutzer abgenommen und der Deckel wird mit seinem dem Auslass gegenüberliegenden Rand auf den Ring bzw. die offene Seite des Bechers aufgebracht bzw. über den Ring bzw. die offene Seite des Bechers gestülpt. Zur Abdichtung ist auf der Deckelinnenseite vorzugsweise eine Dichtung vorgesehen ist, die auf dem oberen Rand des Rings bzw. dem öffnungsseitigen Becherrand zum Aufliegen kommt.

Die Verbindungsmittel können elastisch und/oder auftrennbar ausgeführt sein, sodass zum Aufbringen des Deckels auf den Ring bzw. den öffnungsseitigen Becherrand der Deckel entweder von den Verbindungsmitteln abgetrennt wird bzw. die Verbindungsmittel manuell auftrennt werden oder der Deckel unter Biegung der Verbindungsmittel aufgebracht wird.

Es sind vorzugsweise Einrastmittel vorgesehen, die derart ausgestaltet sind, dass der Deckel am Ring bzw. am Becher eingerastet werden kann, wobei die Einrastmittel vorzugsweise eine Nut und eine Ausbuchtung umfassen und die Nut an der Deckelinnenseite und die Ausbuchtung an der Ring- bzw. Becheraussenseite oder die Ausbuchtung an der Deckelinnenseite und die Nut an der Ring- bzw. Becheraussenseite vorgesehen sein können. Das Einrasten des Deckels kann ebenfalls eine Erstöffnungsgarantie darstellen, falls die Einrastmittel derart ausgestaltet sind, dass der Deckel nach dem Einrasten nicht mehr gelöst werden kann.

Bei der Herstellung/Befüllung werden die den einzelnen Kammern zugeordneten Stoffe bzw. Komponenten in die einzelnen Kammern gefüllt und eine Folie wird auf dem Becher und die Trennwände vorzugsweise durch Schweissen aufgebracht, damit sich die einzelnen Komponenten insbesondere beim Transport nicht vermischen können. Schliesslich wird der konische Deckel angebracht. Da die einzelnen Komponenten erst beim Einnehmen vermischt werden, bleibt ihre Frische relativ lange erhalten. Weil die einzelnen Stoffe bereits bei der Herstellung in die hierfür vorgesehenen Kammern gefüllt werden, ergibt sich im wesentlichen keine Wartezeit für den Endverbraucher bzw. Kunden, wie sie beispielsweise auftritt, wenn ein Barkeeper einen Cocktail mit einem handelsüblichen Shaker herstellt. Dies ist insbesondere bei Stosszeiten in Bars und Clubs vorteilhaft. Dem Barkeeper bleibt mehr Zeit Kunden und Barumgebung zu beobachten. Da die Menge der einzelnen Stoffe bzw. Komponenten durch die Grösse und die Anzahl der Kammern bestimmt wird, in die sie gefüllt werden, und nicht durch das Augenmass eines Barkeepers, sind die einzelnen Stoffe mengenmässig im Wesentlichen optimal aufeinander abgestimmt und eine gleich bleibende Qualität kann garantiert werden.

Die erfindungsgemässen Mischbehälter können bereits abgefüllt vom Abnehmer, beispielsweise einem Tankstellenbesitzer oder Clubbesitzer erworben werden, wobei bei einer gewissen Abnahmemenge die einzelnen, in den Kammern befindlichen Stoffe vorzugsweise frei vom Abnehmer gewählt werden können. Durch eine grosse Anzahl von Kammern kann eine grosse Anzahl von Variationen und Geschmacksrichtungen für den Abnehmer und den Endbenutzer zur Verfügung gestellt werden. Da der erfindungsgemässe Mischbehälter bereits vorgefüllt ist und somit einem Kunden direkt zur Verfügung gestellt werden kann, vergeht auch keine Wartezeit, die für das Waschen von Gläsern und das Zubereiten der Mischung, beispielsweise in einer Bar, anfallen würde. Da der Mischbehälter bis zur Benutzung durch die Folie verschlossen ist, ist der Transport für Kunden und Bedienungspersonal einfacher als beispielsweise bei einem in ein Glas gefüllten Cocktail in einem Club.

Der erfindungsgemässe Mischbehälter umfasst als Material vorzugsweise Kunststoff, insbesondere Polyethylenterephthalat (PET) und/oder Polystyrol (PS). Besonders bevorzugt besteht der erfindungsgemässe Mischbehälter aus Kunststoff, insbesondere aus PET. Dies hat eine kostengünstige Herstellung des Mischbehälters zur Folge.

Weitere vorteilhafte Ausgestaltungen der Erfindung ergeben sich aus den abhängigen Ansprüchen und den anhand der Zeichnungen nachfolgend dargestellten Ausführungsbeispielen. Es zeigen:
Figur 1 einen erfindungsgemässen Mischbehälter mit vier Kammern ohne Deckel in Seitenansicht (Fig. 1a), in Draufsicht (Fig. 1b) und in perspektivischer Darstellung (Fig. 1c),
Figur 2 einen erfindungsgemässen Mischbehälter mit fünf Kammern ohne Deckel in Seitenansicht (Fig. 2a), in Draufsicht (Fig. 2b) und in perspektivischer Darstellung (Fig. 2c),
Figur 3 einen erfindungsgemässen Mischbehälter mit sechs Kammern ohne Deckel in Seitenansicht (Fig. 3a), in Draufsicht (Fig. 3b) und in perspektivischer Darstellung (Fig. 3c),
Figur 4 einen erfindungsgemässen Mischbehälter mit sieben Kammern ohne Deckel in Seitenansicht (Fig. 4a), in Draufsicht (Fig. 4b) und in perspektivischer Darstellung (Fig. 4c),
Figur 5 einen erfindungsgemässen Mischbehälter mit acht Kammern ohne Deckel in Seitenansicht (Fig. 5a), in Draufsicht (Fig. 5b) und in perspektivischer Darstellung (Fig. 5c),
Figur 6 einen erfindungsgemässen Mischbehälter mit neun Kammern ohne Deckel in Seitenansicht (Fig. 6a), in Draufsicht (Fig. 6b) und in perspektivischer Darstellung (Fig. 6c),
Figur 7 einen erfindungsgemässen Mischbehälter mit zehn Kammern ohne Deckel in Seitenansicht (Fig. 7a), in Draufsicht (Fig. 7b) und in perspektivischer Darstellung (Fig. 7c),
Figur 8 einen erfindungsgemässen Mischbehälter mit elf Kammern ohne Deckel in Seitenansicht (Fig. 8a), in Draufsicht (Fig. 8b) und in perspektivischer Darstellung (Fig. 8c),
Figur 9 einen erfindungsgemässen Mischbehälter mit zwölf Kammern ohne Deckel in Seitenansicht (Fig. 9a), in Draufsicht (Fig. 9b) und in perspektivischer Darstellung (Fig. 9c),
Figur 10 einen weiteren erfindungsgemässen Mischbehälter mit neun Kammern ohne Deckel in Seitenansicht (Fig. 10a), in Draufsicht (Fig. 10b) und in perspektivischer Darstellung (Fig. 10c),
Figur 11 ein erstes Ausführungsbeispiel eines erfindungsgemässen Mischbehälters mit einem Deckel in Seitenansicht (Fig. 11a), in Draufsicht (Fig. 11b) und in perspektivischer Darstellung (Fig. 11c),
Figuren 12 und 13 Explosionsdarstellungen des in Fig. 11 dargestellten ersten Ausführungsbeispiels aus unterschiedlichen Perspektiven,
Figuren 14 bis 17 Zusammenbaudarstellungen des in Figur 11 dargestellten ersten Ausführungsbeispiels aus unterschiedlichen Perspektiven,
Figur 18 ein Aufriss eines zweiten Ausführungsbeispiels eines erfindungsgemässen Mischbehälters mit einem Deckel,
Figur 19 das in Figur 18 dargestellte zweite Ausführungsbeispiel in Seitenansicht (Fig. 19a) und in perspektivischer Darstellung (Fig. 19b) und
Figur 20 eine schematische Darstellung eines Verfahrens zum Befüllen eines erfindungsgemässen Mischbehälters (Fig. 20a) und Draufsichten auf erfindungsgemässe Mischbehälter mit unterschiedlichen Kammeranzahlen und Befüllungen (Fig. 20b).

In den Figuren bezeichnen gleiche Bezugszeichen strukturell bzw. funktionell gleiche bzw. gleichwirkende Komponenten. In den Figuren angegebene Massangaben sind rein beispielhafter Natur. Insbesondere bei perspektivischen Darstellungen sind innenliegende Komponenten bzw. Elemente, wie beispielsweise Trennwände, gepunktet oder gestrichelt dargestellt.

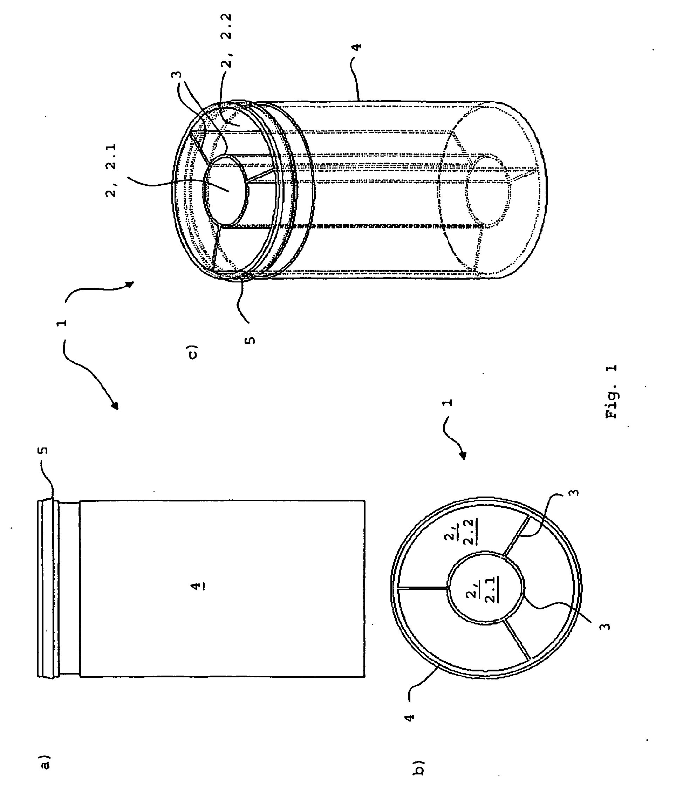

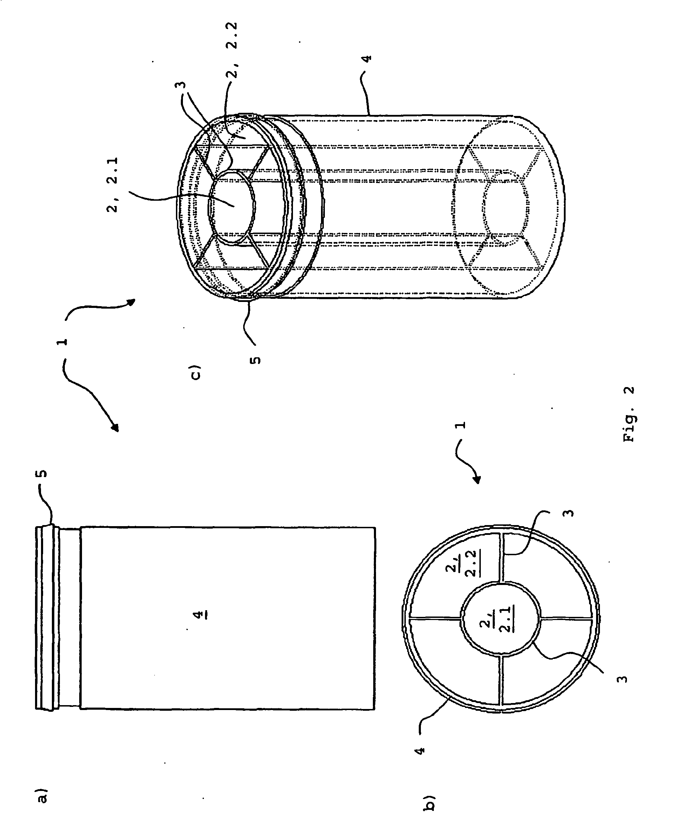

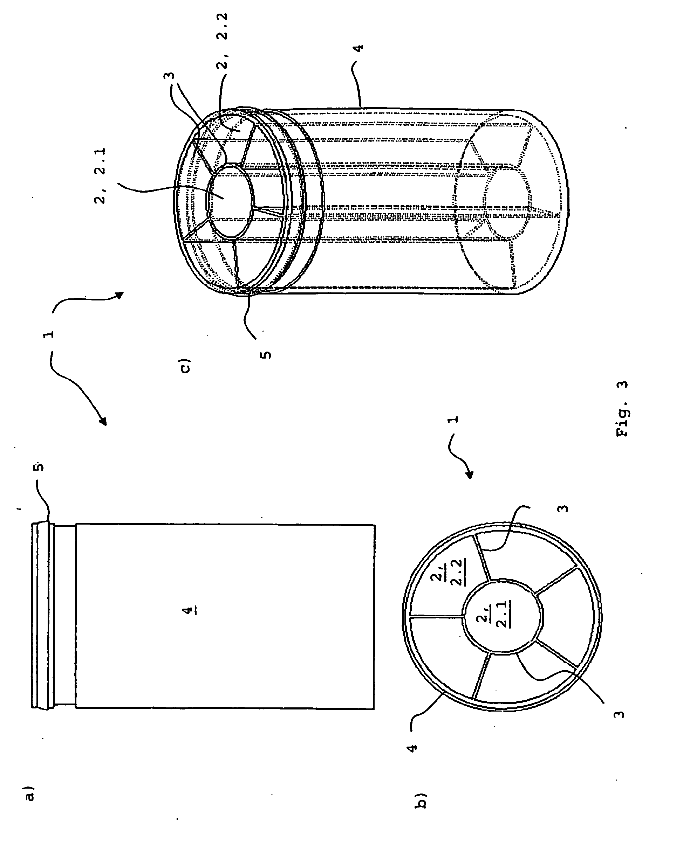

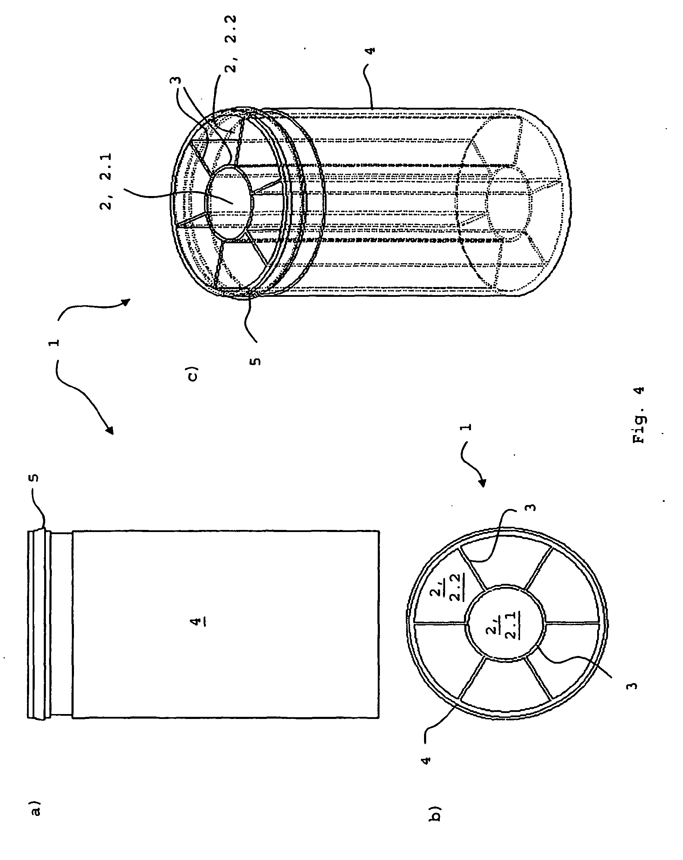

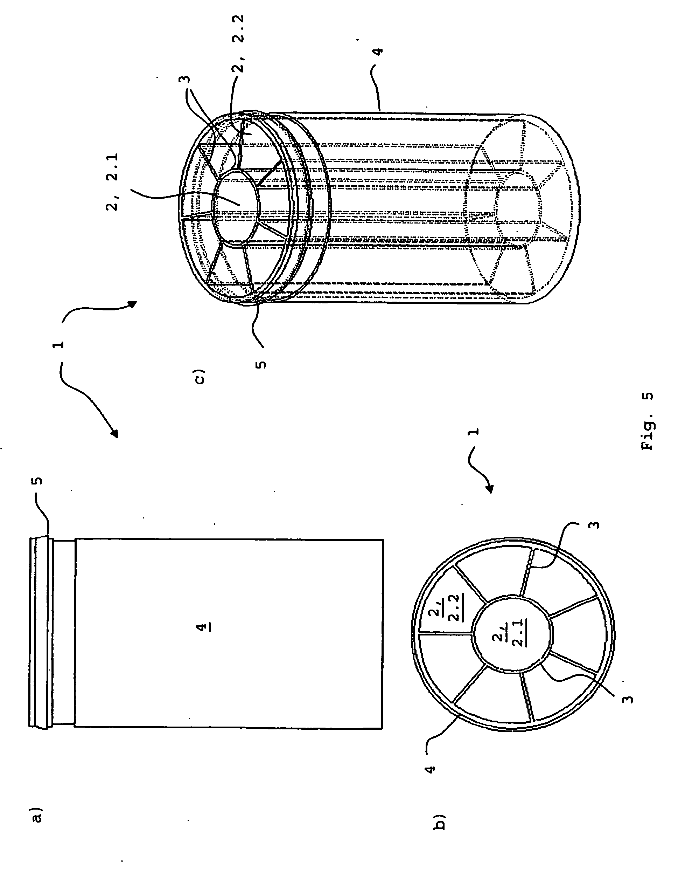

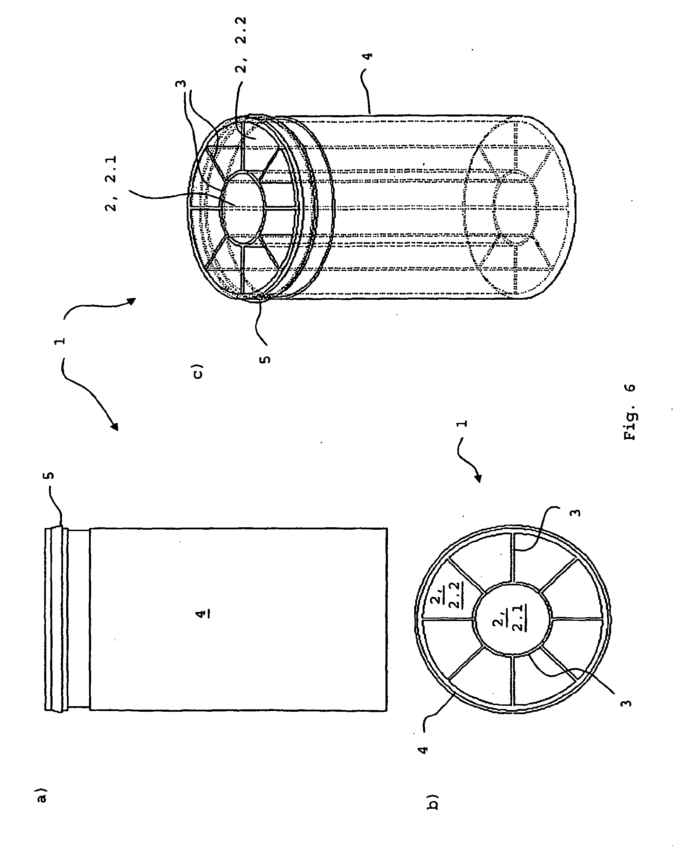

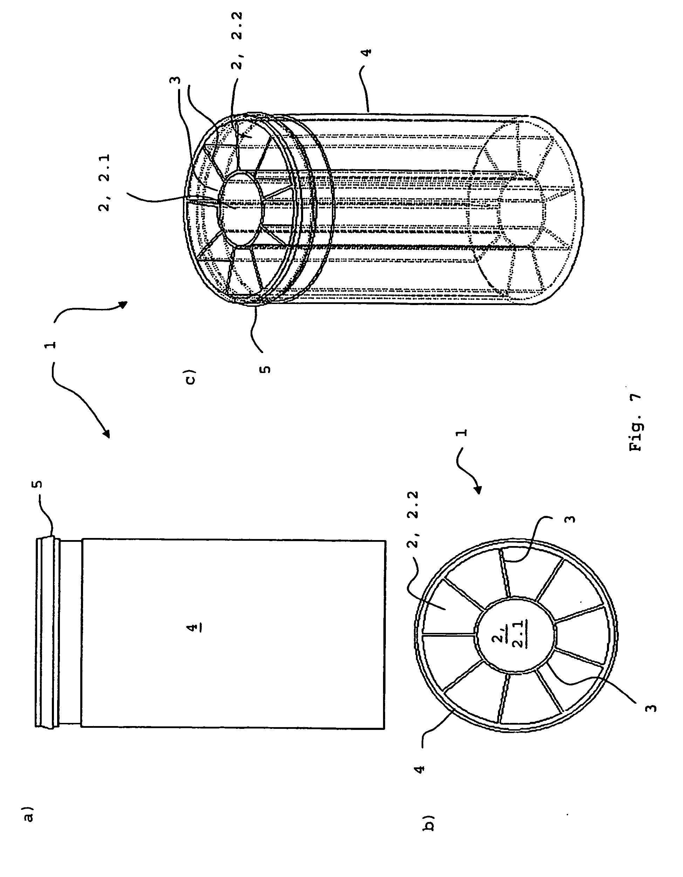

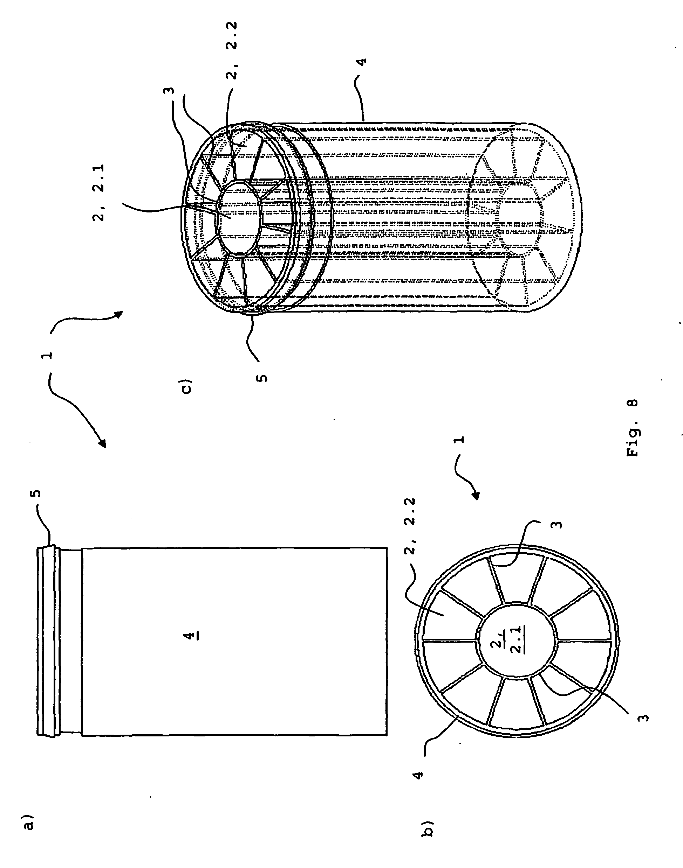

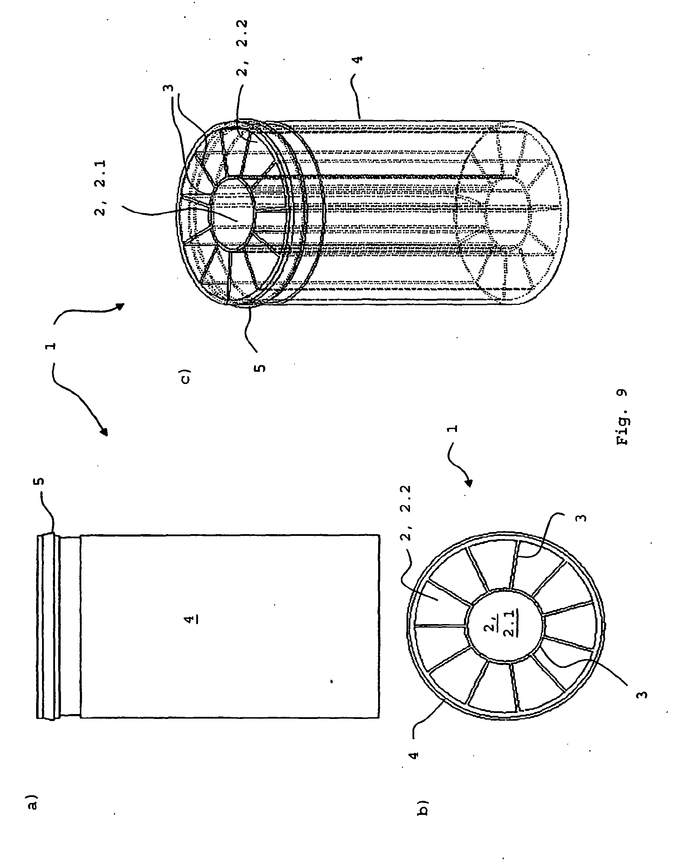

Die Figuren 1-9 zeigen einen erfindungsgemässen Mischbehälter 1 mit einer unterschiedlichen Anzahl von Kammern 2, wobei der Einfachheit halber der Deckel nicht dargestellt wurde. Die Kammern 2 werden durch Trennwände 3 innerhalb eines Bechers 4 des Mischbehälters 1 gebildet, wobei die Trennwände 3 vorzugsweise parallel zu einer Wand des Bechers 4 angeordnet sind. An einem oberen Rand bzw. Randbereich der Bechers 4 sind dem Becher 4 zugeordnete Einrastmittel 5 vorgesehen, mit Hilfe derer ein nicht dargestellter Deckel an dem Becher 4 eingerastete werden kann. Die dem Becher 4 zugeordneten Einrastmittel 5 sind vorzugsweise als Ausbuchtung, insbesondere als Lippe, ausgestaltet.

In jede Kammer 2 kann ein flüssiger oder ein fester Stoff eingebracht werden. Die Anzahl der Kammern 2 bestimmt die Anzahl der Stoffe, die vermischt werden sollen. Die Trennwände 3 trennen die Stoffe voneinander. Vorzugsweise ist eine Kammer 2.1 mittig in dem Becher 4 angeordnet. Die um die mittige Kammer 2.1 herum angeordneten Kammern 2.2 sind vorzugsweise symmetrisch um die mittige Kammer 2.1 angeordnet und haben dieselbe Grösse. Die mittig angeordnete Kammer 2.1 hat vorzugsweise einen kreisförmigen Durchmesser. Selbstverständlich kann die Kammer 2.1 auch einen anderen Durchmesser, beispielsweise einen ellipsenförmigen oder polygonalen bzw. polygonförmigen Durchmesser aufweisen. Weist die Kammer 2.1 einen polygonalen bzw. polygonförmigen Durchmesser auf, so kann es sich hierbei insbesondere um einen quadratischen, rechteckigen oder dreieckigen bzw. um einen quadratförmigen, rechteckförmigen oder dreieckförmigen Durchmesser handeln. Eine kreisförmige oder ellipsenförmige Kammer 2.1 kann natürlich auch an anderer Stelle, zum Beispiel an der Innenwand des Bechers 4 angeordnet sein. Beispielsweise kann in die mittig angeordnete Kammer 2.1 eine alkoholische Flüssigkeit eingebracht werden, während die an den Rändern angeordneten Kammern 2.2 Fruchtsäfte enthalten. Durch die mittige Anordnung der Kammer 2.1 wird insbesondere sichergestellt, dass jeder der in einer der an der Becherinnenwand angeordneten Kammern 2.2 vorgesehenen Stoffe bei Gebrauch im Wesentlichen gleich viel mit dem in der mittig angeordneten Kammer 2.1 vorgesehenen Stoff vermischt bzw. verwirbelt wird. Je mehr Kammern 2 der erfindungsgemässe Mischbehälter 1 aufweist, umso mehr Stoffe können miteinander vermischt werden.

Beispielhaft kann der in den Figuren 1-9 dargestellte erfindungsgemässe Mischbehälter 1 folgende Masse aufweisen: Der Becher 4 hat am Boden einen Durchmesser von 35 mm. Im Bereich des Einrastmittels 5 hat der Becher 4 einen Durchmesser von 36 mm. Die Höhe des Bechers 4 beträgt 62 mm. Der Innendurchmesser des Bechers 4 beträgt 33 mm und die mittig angeordnete Kammer 2.1 hat einen Aussendurchmesser von 14,5 mm. Das Einrastmittel 5 hat eine Höhe von 2 mm. Die Wandstärke des Becherrandes beträgt 1 mm. Die Wandstärke der Trennwände 3 beträgt 0,5 mm. Andere Masse sind denkbar. So kann der Becher 4 beispielsweise auch eine Höhe von 200 mm und einen Innenoder Aussendurchmesser von 60 mm haben, wobei vorzugsweise die Wandstärke des Becherrandes 1 mm und die Wandstärke der Trennwände 0,5 mm beträgt. Der Becher 4 kann beispielhaft ein Volumen von 100 cl haben.

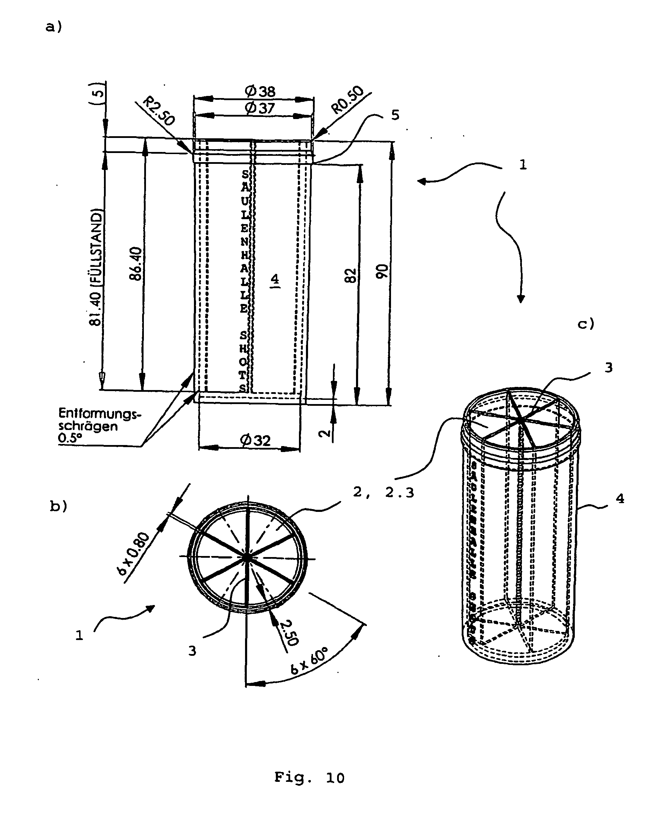

Figur 10 zeigt eine weitere Ausgestaltung eines erfindungsgemässen Mischbehälters mit sechs Kammern 2. Auch hier wurde der Deckel der Einfachheit der Darstellung halber weggelassen. Anders als bei den Figuren 1-9 ist keine mittig angeordnete, kreisförmige Kammer vorgesehen, sondern der Becher 4 ist tortenartig in kreissegmentförmige Kammern 2.3 eingeteilt, die vorzugsweise alle die gleiche Grösse aufweisen. Bei sechs Kammern 2.3 ergibt sich für jede Kammer einen Winkelbereich von 60°. Beispielhaft wurde eine Trennwandstärke von 0,8 mm gewählt.

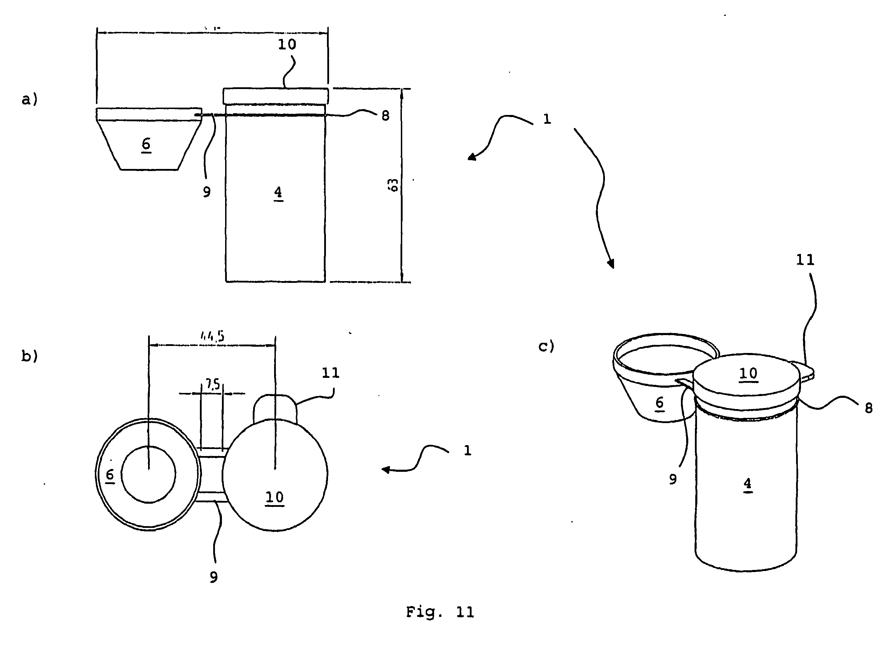

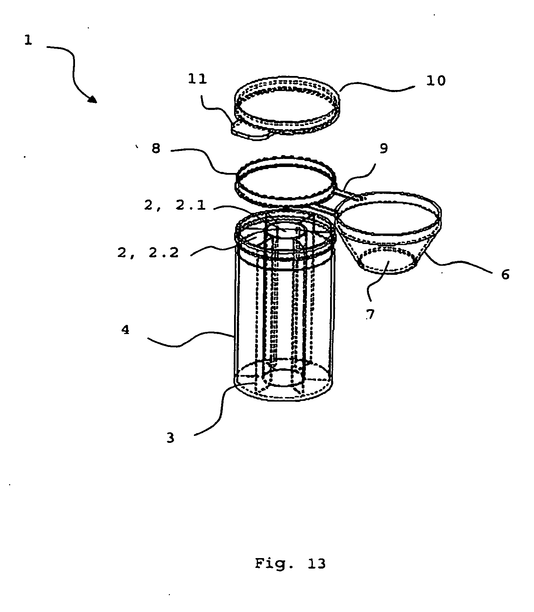

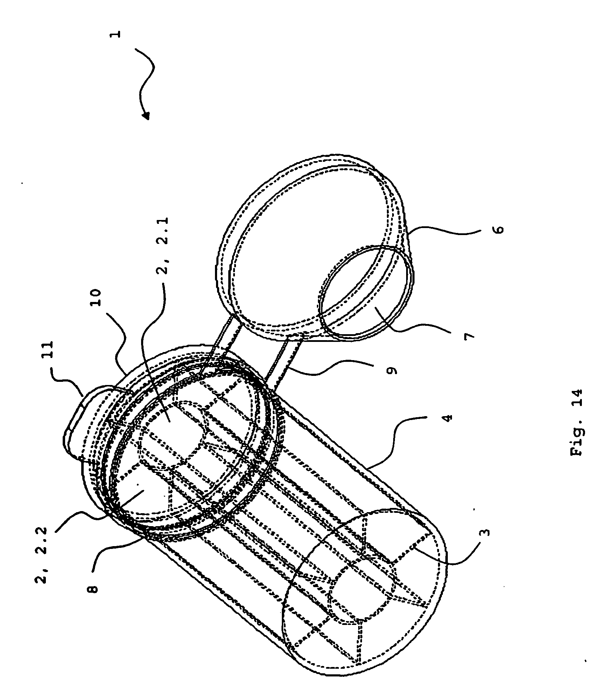

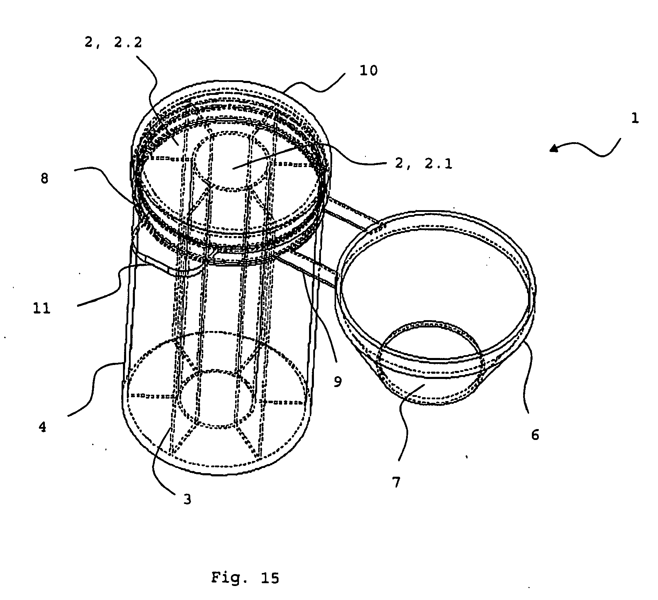

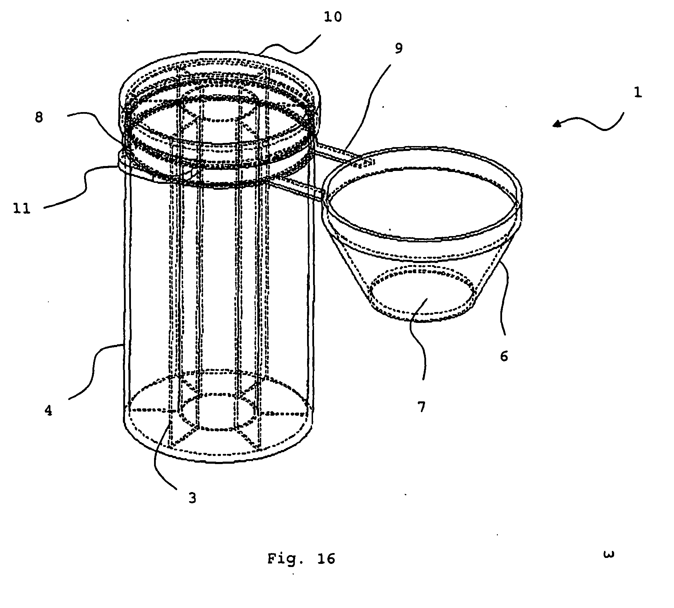

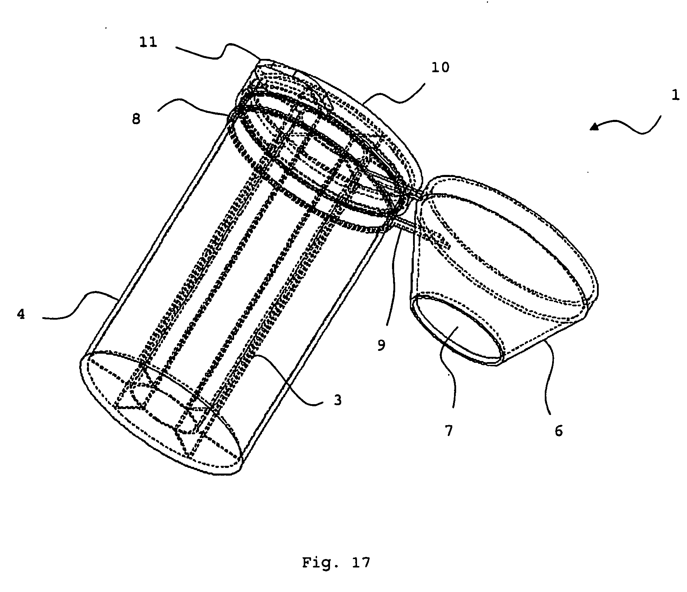

Figuren 11-17 zeigen ein erstes Ausführungsbeispiel eines erfindungsgemässen Mischbehälters 1 mit einem Deckel 6 vor dem Gebrauch, d.h. so wie er dem Abnehmer bzw. Benutzer zur Verfügung gestellt wird. Auf den oberen Rändern von Becher 4 und Trennwänden 3 ist eine Folie befestigt, sodass die Inhalte der Kammern 2 nicht miteinander vermischt werden können (nicht dargestellt). Der Becher 4 ist an seinem öffnungsseitigen Rand mit einem abnehmbaren Verschluss 10 verschlossen, der vorzugsweise eine Lasche 11 zum Entfernen aufweist. Unterhalb des abnehmbaren Verschlusses 10 ist im oberen Bereich des Behälters 4 ein Ring 8 vorgesehen, der vorzugsweise auf einem in der Aussenwand des Bechers 4 vorgesehenen, nicht näher gekennzeichneten Absatz aufliegt. An dem Ring 8 ist über Verbindungsmittel 9, die vorzugsweise als zwei Stege ausgebildet sind, ein konischförmiger bzw. kegelstumpfförmiger Deckel 6 angeordnet. Der Deckel 6 ist bevorzugt mit dem Ende bzw. Endbereich an dem Verbindungsmittel 9 befestigt, welches den grössten Durchmesser aufweist. An dem Ende mit dem kleinsten Durchmesser weist der Deckel 6 einen Auslass 7 auf, der bevorzugt mittig angeordnet ist. Der Abstand von dem äusseren Rand der abnehmbaren Verschlusskappe 10 zu dem äusseren Rand des Endbereichs des Deckels 6, der den grössten Durchmesser aufweist, beträgt beispielhaft 7,5 mm.

Für den Gebrauch wird der abnehmbare Verschluss 10 mittels der Lasche 11 von dem Becher 4 entfernt. Dann wird der Deckel 7 mit seinem Endbereich mit dem grössten Durchmesser auf die offene Seite des Bechers 4 aufgebracht. Das Aufbringen kann entweder dadurch erfolgen, dass der Deckel 6 von den Verbindungsmitteln 9 abgetrennt wird oder dass der Deckel 6 ohne Auftrennung der Verbindungsmittel 9 durch Biegen der Verbindungsmittel 9 auf die offene Seite des Bechers 4 geklappt wird.

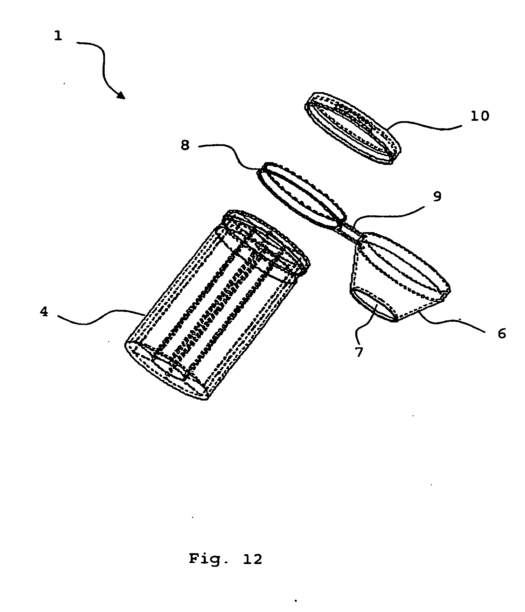

Der Deckel 6 weist vorzugsweise Schneid- und Spreizelemente auf (nicht dargestellt) die die nicht dargestellte Folie, welche die Kammern 2 verschliesst, öffnet bzw. zerstört, sodass ein Benutzer nun aus dem erfindungsgemässen Mischbehälter über den Auslass 7 des Deckels 6 die in den Kammern 2 befindlichen Stoffe aufnehmen kann, insbesondere trinken kann, die sich im Inneren des Deckels 6 vermischen. Weist der Becher 4 eine mittig angeordnete Kammer 2.2 auf, so befindet sich der Auslass 7 des Deckels 6 im auf dem Becher 4 geklappten Zustand zentriert oberhalb der mittig angeordneten Kammer 2.2. Beispielhaft sind in den Figuren 12-17 jeweils sieben Kammern 2 mit einer mittig angeordneten Kammer 2.1 dargestellt.

Sowohl der Deckel 6 als auch der Becher 4 weisen bevorzugt Einrastmittel auf (nicht dargestellt), mittels derer der Deckel 6 in einer bestimmten Position am oberen Rand bzw. am oberen Randbereich des Bechers 4 zum Benutzen eingerastet werden kann.

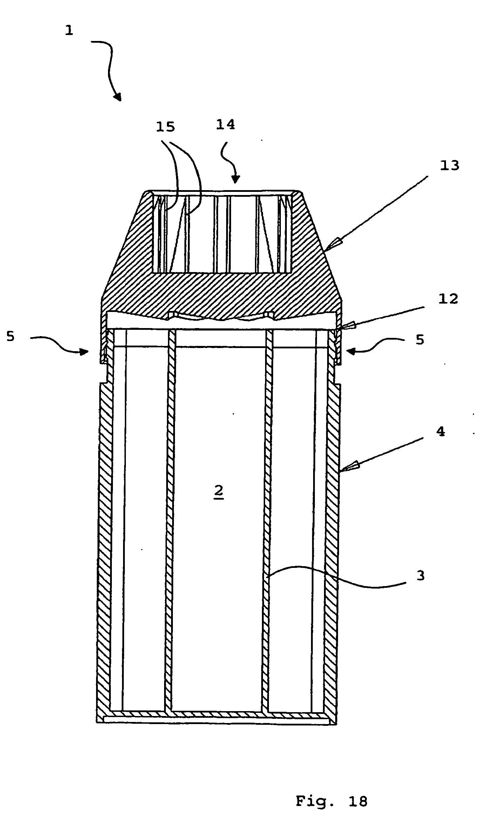

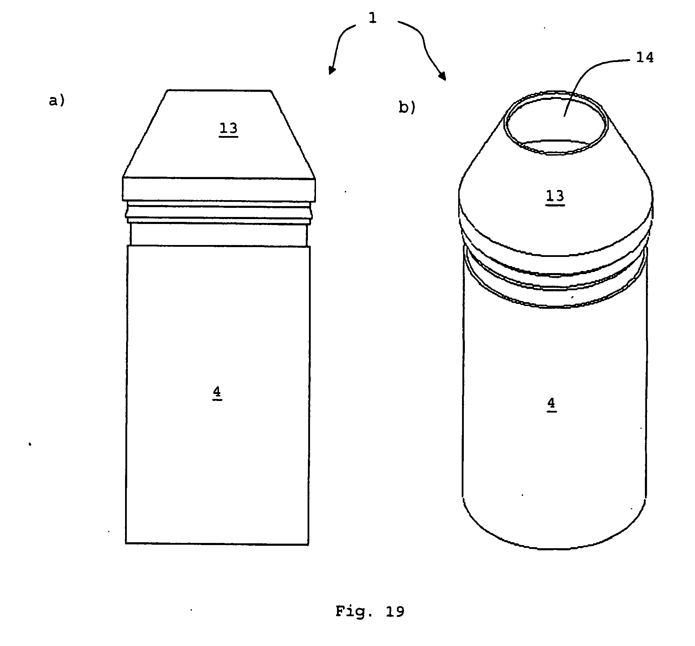

Figuren 18 und 19 zeigen ein zweites Ausführungsbeispiel eines erfindungsgemässen Mischbehälters mit einem Deckel 13, der einen bevorzugt zentrisch angeordnete Auslass 14 zur Einnahme der in den Kammern 2 des Bechers 4 befindlichen Stoffe in gemischter Form aufweist. In unbenutzter Form werden die Öffnungen der Kammern 2 mittels einer Folie 12 verschlossen, die auf den oberen Rändern der Trennwände 3 und des Bechers 4 vorzugsweise mittels Schweissen befestigt worden ist. Hierdurch kann bis zum Gebrauch ein Vermischen der in den Kammern 2 befindlichen Stoffe (beispielsweise beim Transport) verhindert werden. An der Deckelinnenseite sind Spreizelemente und Schneidelemente 15 angeordnet, die zum Öffnen der Folie 12 für den Gebrauch/die Benutzung dienen.

Vor der ersten Benutzung ist der Deckel 13 in einer ersten Position derart auf dem Becher 4 angeordnet, dass die Schneid- und Spreizelemente 15 nicht mit der Folie 12 in Berührung kommen bzw. diese nicht zerstören können. Hierzu sind Einrastmittel 5 vorgesehen, die zum Halten des Deckels 13 in dieser ersten Position im äusseren oberen Randbereich des Bechers 4 eine Nut und am inneren unteren Randbereich des Deckels 13 eine Ausbuchtung aufweisen, wobei in der ersten Position die Ausbuchtung in der Nut zum Aufliegen kommt bzw. in diese einrastet.

Zum Öffnen der Folie 12 wird der Deckel 13 in eine zweite, von der offenen Seite des Bechers 4 weiter als die erste Position entfernte Position gebracht, indem der Deckel 13 nach unten bewegt bzw. gedrückt wird. Das Nachuntenbewegen des Deckels 13 kann beispielsweise durch einen Schlag vom Benutzer auf den Deckel 13 erfolgen. In dieser zweiten Position bzw. beim Bewegen in diese zweite Position zerstören die Schneidelemente 15 die Folie 12 und die Spreizelemente 15 drücken die einzelnen Folienteile an die Becherinnenseite, sodass für das Einnehmen der in den Kammern befindlichen Stoffe durch den Auslass 14 die Stoffe ungehindert in den Deckelinnenraum fliessen und sich dort vermischen können (bei entsprechender Haltung des erfinderischen Mischbehälters 1).

Für das Einrasten des Deckels 13 in der zweiten Position weisen die Einrastmittel 5 vorzugsweise eine weitere Nut und eine weitere Ausbuchtung auf, wobei sich die zweite Ausbuchtung weiter aussen am inneren Deckelrand befindet und sich die zweite Nut tiefer an der Becheraussenseite als die erste Nut befindet. Beim Einrasten in der zweiten Position rastet dann die zweite Ausbuchtung in der zweiten Nut ein. Selbstverständlich können die Plätze von Ausbuchtung und Nut jeweils vertauscht sein, d.h. die Nuten können sich an der Deckelinnenseite befinden, während sich die Ausbuchtungen an der Becheraussenseite befinden.

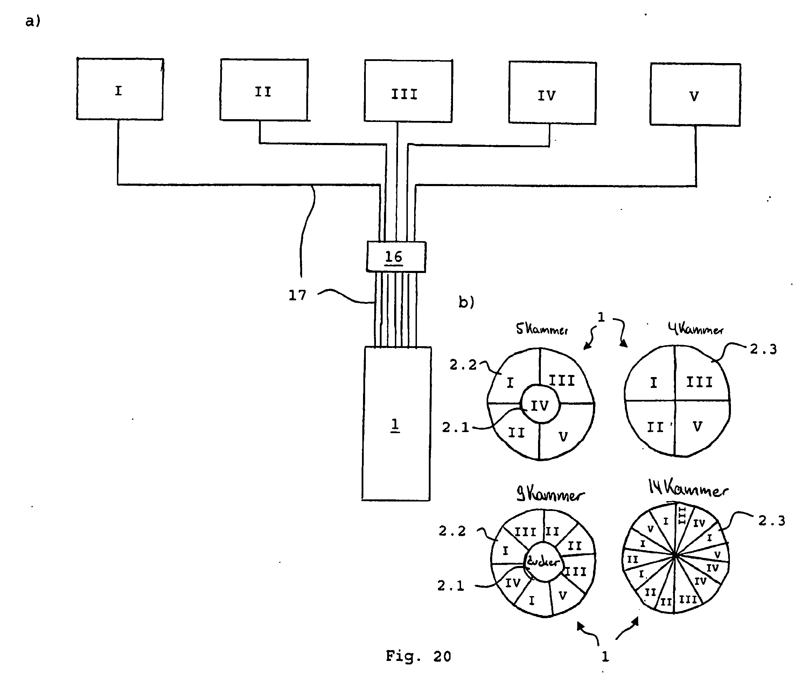

Figur 20a zeigt eine schematische Darstellung der Befüllung eines erfindungsgemässen Mischbehälters 1. Beispielhaft wird der erfindungsgemässe Mischbehälter 1 mit fünf Flüssigkeiten I-V befüllt, die über eine Abfüllanlage 16 in die einzelnen Kammern 2 des erfindungsgemässen Mischbehälters 1 gefüllt werden. Es sind entsprechende Zufuhrleitungen 17 vorgesehen.

Figur 20b zeigt erfindungsgemässe Mischbehälter 1 mit unterschiedlichen Kammeranordnungen, die gemäss dem in Figur 20a schematisch dargestellten Verfahren unterschiedlich befüllt worden sind. Der vom Betrachter aus gesehen in der linken oberen Ecke von Figur 20b dargestellt erfindungsgemässe Mischbehälter 1 weist fünf Kammern 2 auf, von denen eine Kammer 2.1 mittig angeordnet ist und vier Kammern 2.2 symmetrisch um die mittige Kammer 2.1 herum angeordnet sind. In jede Kammer wird eine unterschiedliche Flüssigkeit I-V eingefüllt, wobei die Flüssigkeit IV in die mittige Kammer eingebracht ist. Bei den Flüssigkeiten I, II, III und V kann es sich beispielsweise um vier unterschiedliche Fruchtsäfte handeln, während es sich bei der Flüssigkeit IV um eine alkoholische Flüssigkeit handelt.

Der in Figur 20b vom Betrachter aus gesehen rechts oben angeordnete erfindungsgemässe Mischbehälter 1 weist vier tortenstückartige Kammern 2.3 auf, die alle die gleiche Grösse aufweisen. Beispielhaft sind in die Kammern 2.3 die Flüssigkeiten I, II, III und V mittels der Abfüllanlage 16 eingebracht worden, wobei es sich beispielsweise um nichtalkoholische Flüssigkeiten wie Fruchtsäfte handeln kann. Das heisst, im Unterschied zu dem links oben dargestellten Mischbehälter 1 wurde von einer Befüllung mit der alkoholischen Flüssigkeit IV abgesehen.

Vom Betrachter aus gesehen links unten in Figur 20b ist ein erfindungsgemässe Mischbehälter mit neun Kammern 2 dargestellt, der eine mittig angeordnete Kammer 2.1 und symmetrisch um diese herum angeordnete Kammern 2.2 aufweist, wobei die Kammern 2.2 alle die gleiche Grösse und Form haben sollen. Beispielhaft ist in die mittige Komponente ein fester Stoff in Form von Zucker eingebracht worden, während die Flüssigkeiten I-V in die Kammern 2.2 eingebracht worden sind, wobei für die Dosierung auch eine Flüssigkeit I-V in mehrere Kammern 2.2 eingebracht wurde.

Vom Betrachter aus gesehen rechts unten in Figur 20b ist ein erfindungsgemässer Mischbehälter 1 mit 14 Kammern 2.3 dargestellt, die sämtlich tortenstückartig ausgebildet sind und vorzugsweise die gleiche Grösse aufweisen. Selbstverständlich können die Kammern 2.3 auch unterschiedlich grosse Kreissegmente sein. Über die Abfüllanlage 16 wurden die Flüssigkeiten I-V eingebracht, wobei eine Flüssigkeit I-V auch in mehrere Kammern 2.3 eingebracht werden kann. Auf diese Weise lassen sich die Verhältnisse zwischen einzelnen Flüssigkeiten variieren.

## Patentansprüche

1. Mischbehälter mit einem Becher (4) und einem Deckel (6; 13), wobei der Becher (4) wenigstens drei Kammern (2, 2.1, 2.2, 2.3) aufweist, die durch Trennwände (3) voneinander getrennt sind, die Kammern (2, 2.1, 2.2, 2.3) an einer offenen Seite des Bechers (4) jeweils eine Öffnung aufweisen und eine Folie (12) zum Verschliessen der Öffnungen der Kammern (2, 2.1, 2.2, 2.3) vor der ersten Benutzung vorgesehen ist, **dadurch gekennzeichnet, dass** der Deckel (6; 13) Mittel (15) zum Auftrennen der Folie (12) aufweist.

2. Mischbehälter nach Anspruch 1, **dadurch gekennzeichnet, dass** der Deckel (6; 13) konisch geformt ist oder eine andere als eine konische Form aufweist.

3. Mischbehälter nach Anspruch 1 oder 2, **dadurch gekennzeichnet, dass** der Deckel (6; 13) einen Auslass (7) aufweist.

4. Mischbehälter nach Anspruch 3, **dadurch gekennzeichnet, dass** der Auslass (7) mit einem entfernbaren Schutzelement versehen ist.

5. Mischbehälter nach einem der vorhergehenden Ansprüche, **dadurch gekennzeichnet, dass** die Mittel (15) zum Auftrennen der Folie (12) Schneid- und/oder Spreizelemente aufweisen.

6. Mischbehälter nach einem der vorhergehenden Ansprüche, **dadurch gekennzeichnet, dass** Einrastmittel (5) zum Positionieren des Deckels (6; 13) vorgesehen sind.

7. Mischbehälter nach Anspruch 6, **dadurch gekennzeichnet, dass** die Einrastmittel (5) eine Nut und eine Ausbuchtung umfassen.

8. Mischbehälter nach Anspruch 6 oder 7, **dadurch gekennzeichnet, dass** die Einrastmittel (5) derart ausgestaltet sind, dass der Deckel (13) vor der Benutzung des Mischbehälters (1) in einer ersten Position gehalten und für die Benutzung des Mischbehälter (1) in einer zweiten Position eingerastet werden kann.

9. Mischbehälter nach Anspruch 8, **dadurch gekennzeichnet, dass** die Einrastmittel (5) für jede Position des Deckels (13) eine Nut und eine Ausbuchtung umfassen, wobei entweder die Nut an einer Deckelinnenseite und die Ausbuchtung an einer Becheraussenseite oder die Nut an der Becheraussenseite und die Ausbuchtung an der Deckelinnenseite angeordnet sind.

10. Mischbehälter nach Anspruch 8 oder 9, **dadurch gekennzeichnet, dass** die zweite Position des Deckels (13) derart gewählt ist, dass eine die Öffnungen der Kammern (2, 2.1, 2.2, 2.3) verschliessende Folie (12) mittels an dem Deckel (6; 13) vorgesehener Mittel (15) zum Auftrennen der Folie (12) auftrennbar ist.

11. Mischbehälter nach einem der vorhergehenden Ansprüche, **dadurch gekennzeichnet, dass** eine der Kammern (2, 2.1) mittig angeordnet ist.

12. Mischbehälter nach Anspruch 11, **dadurch gekennzeichnet, dass** die mittig angeordnete Kammer (2, 2.1) einen kreisförmigen, ellipsenförmigen oder polygonalen, insbesondere einen quadratischen, rechteckigen oder dreieckigen, Durchmesser aufweist.

13. Mischbehälter nach einem der vorhergehenden Ansprüche, **dadurch gekennzeichnet, dass** eine Kammer (2, 2.1) mit einem kreisförmigen oder ellipsenförmigen Durchmesser vorgesehen ist.

14. Mischbehälter nach einem der vorhergehenden Ansprüche, **dadurch gekennzeichnet, dass** die Trennwände (3) zumindest teilweise spiralförmig verlaufen.

15. Mischbehälter nach einem der vorhergehenden Ansprüche, **dadurch gekennzeichnet, dass** auf der Deckelinnenseite Mittel zur Verwirbelung, insbesondere Rillen und/oder Kanten, vorgesehen sind.

## Claims

1. Mixing vessel with a cup (4) and a lid (6; 13), wherein the cup (4) has at least three chambers (2, 2.1, 2.2, 2.3), which are separated from each other by separating walls (3), the chambers (2, 2.1, 2.2, 2.3) each having an opening at an open side of the cup (4) and a film (12) for closing the openings of the chambers (2, 2.1, 2.2, 2.3) before the first use, **characterized in that** the lid (6; 13) has means (15) for ripping up the film (12).

2. Mixing vessel according to claim 1, **characterized in that** the lid (6; 13) is conically shaped or has a shape different from a conical shape.

3. Mixing vessel according to claim 1 or 2, **characterized in that** the lid (6; 13) has an outlet (7).

4. Mixing vessel according to claim 3, **characterized in that** the outlet (7) is provided with a removable protection element.

5. Mixing vessel according to one of the preceding claims, **characterized in that** the means (15) for ripping up the film (12) comprise cutting and/or spreading elements.

6. Mixing vessel according to one of the preceding claims, **characterized in that** locking means (5) are provided for the positioning of the lid (6; 13).

7. Mixing vessel according to claim 6, **characterized in that** the locking means (5) comprise a groove and a bulge.

8. Mixing vessel according to claim 6 or 7, **characterized in that** the locking means (5) are designed such that the lid (13) is held in a first position before the use of the mixing vessel (1) and can be locked in a second position for the use of the mixing vessel (1).

9. Mixing vessel according to claim 8, **characterized in that** the locking means (5) for each position of the lid (13) comprise a groove and a bulge, wherein either the groove is arranged at a inner surface of the lid and the bulge is arranged at an outer surface of the cup or the groove is arranged at the outer surface of the cup and the bulge is arranged at the inner surface of the lid.

10. Mixing vessel according to claim 8 or 9, **characterized in that** the second position of the lid (13) is chosen such that a film (12) that closes the openings of the chambers (2, 2.1, 2.2, 2.3) can be ripped up by means (15) for ripping up the foil (12) that are provided on the lid (6; 13).

11. Mixing vessel according to one of the preceding claims, **characterized in that** one of the chambers (2, 2.1) is arranged centrically.

12. Mixing vessel according to claim 11, **characterized in that** the centrically arranged chamber (2, 2.1) has a circular, elliptic or polygonal, in particular a quadratic, rectangular or triangular, diameter.

13. Mixing vessel according to one of the preceding claims, **characterized in that** a chamber (2, 2.1) with a circular or elliptic diameter is provided.

14. Mixing vessel according to one of the preceding claims, **characterized in that** the separating walls (3) run at least partly helically.

15. Mixing vessel according to one of the preceding claims, **characterized in that** means for swirling, in particular chamfers and/or rims, are provided on the inner surface of the lid.

## Revendications

1. Récipient de mélange comprenant un godet (4) et un couvercle (6 ; 13), le godet (4) ayant au moins trois chambres (2, 2.1, 2.2, 2.3) qui sont séparées les unes des autres par des cloisons (3), les chambres (2, 2.1, 2.2, 2.3) ayant respectivement une ouverture sur un côté ouvert du godet (4) et il est prévu une feuille (12) de fermeture des ouvertures des chambres (2, 2.1, 2.2, 2.3) avant la première utilisation, **caractérisé en ce que** le couvercle (6 ; 13) a des moyens de séparation de la feuille (12).

2. Récipient de mélange suivant la revendication 1, **caractérisé en ce que** le couvercle (6 ; 13) est de forme conique ou a une forme autre qu'une forme conique.

3. Récipient de mélange suivant la revendication 1 ou 2, **caractérisé en ce que** le couvercle (6 ; 13) a une sortie (7).

4. Récipient de mélange suivant la revendication 3, **caractérisé en ce que** la sortie (7) est munie d'un élément de protection pouvant être retiré.

5. Récipient de mélange suivant l'une des revendications précédentes, **caractérisé en ce que** les moyens (15) de séparation de la feuille (12) ont des éléments de coupe et/ou des éléments d'écartement.

6. Récipient de mélange suivant l'une des revendications précédentes, **caractérisé en ce qu'**il est prévu des moyens (5) d'encliquetage pour la mise en position du couvercle (6 ; 13).

7. Récipient de mélange suivant la revendication 6, **caractérisé en ce que** les moyens (5) d'encliquetage comprennent une rainure et une indentation.

8. Récipient de mélange suivant la revendication 6 ou 7, **caractérisé en ce que** les moyens (5) d'encliquetage sont conformés de manière à ce que le couvercle (13) puisse être maintenu en une première position avant l'utilisation du récipient (1) de mélange et puisse être encliqueté dans une deuxième position pour l'utilisation du récipient (1) de mélange.

9. Récipient de mélange suivant la revendication 8, **caractérisé en ce que** les moyens (5) d'encliquetage comprennent, pour chaque position du couvercle (13), une rainure et une indentation, la rainure étant disposée sur une face intérieure du couvercle et l'indentation sur une face extérieure du godet ou la rainure étant disposée sur la face extérieure du godet et l'indentation sur la face intérieure du couvercle.

10. Récipient de mélange suivant la revendication 8 ou 9, **caractérisé en ce que** la deuxième position du couvercle est choisie de manière à ce qu'une feuille (12) fermant les ouvertures des chambres (2, 2.1, 2.2, 2.3) puisse être séparée à l'aide de moyens (15) de séparation de la feuille (12) prévus sur le couvercle (6 ; 13).

11. Récipient de mélange suivant l'une des revendications précédentes, **caractérisé en ce que** l'une des chambres (2, 2.1, 2.2, 2.3) est disposée au milieu.

12. Récipient de mélange suivant la revendication 11, **caractérisé en ce que** la chambre (2, 2.1) disposée au milieu est circulaire ou polygonale, notamment carrée, rectangulaire ou triangulaire.

13. Récipient de mélange suivant l'une des revendications précédentes, **caractérisé en ce qu'**il est prévu une chambre (2, 2.1) circulaire ou elliptique.

14. Récipient de mélange suivant l'une des revendications précédentes, **caractérisé en ce que** les cloisons (3) s'étendent au moins en partie en forme de spirale.

15. Récipient de mélange suivant l'une des revendications précédentes, **caractérisé en ce qu'**il est prévu, sur la face intérieure du couvercle, des moyens de tourbillonnement, notamment des rainures et/ou des arêtes.
